(19) **Europäisches Patentamt / European Patent Office / Office européen des brevets**

(11) **EP 2 955 977 B1**

(12) **EUROPEAN PATENT SPECIFICATION**

(45) Date of publication and mention of the grant of the patent:
**29.11.2017 Bulletin 2017/48**

(21) Application number: **13874575.7**

(22) Date of filing: **30.09.2013**

(51) Int Cl.:
*H05B 6/36* (2006.01)  *H05B 6/12* (2006.01)

(86) International application number:
**PCT/JP2013/076566**

(87) International publication number:
**WO 2014/122820 (14.08.2014 Gazette 2014/33)**

(54) **INDUCTION HEATING COIL, AND INDUCTION HEATING DEVICE USING SAME**

INDUKTIONSHEIZSPULE UND INDUKTIONSHEIZVORRICHTUNG DAMIT

SERPENTIN DE CHAUFFAGE À INDUCTION, ET DISPOSITIF DE CHAUFFAGE À INDUCTION L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2013 JP 2013021063**

(43) Date of publication of application:
**16.12.2015 Bulletin 2015/51**

(73) Proprietors:
• **Mitsubishi Electric Corporation**
  **Tokyo 100-8310 (JP)**
• **Mitsubishi Electric Home Appliance Co., Ltd.**
  **Fukaya-shi, Saitama 369-1295 (JP)**

(72) Inventors:
• **SUGA, Ikuro**
  **Tokyo 100-8310 (JP)**
• **TAKESHITA, Miyuki**
  **Tokyo 100-8310 (JP)**
• **MATSUDA, Tetsuya**
  **Tokyo 100-8310 (JP)**
• **KINOSHITA, Hirokazu**
  **Fukaya-shi**
  **Saitama 369-1295 (JP)**

• **FUJIWARA, Yuki**
  **Nishinomiya-shi**
  **Hyogo 662-0867 (JP)**
• **KISHI, Akio**
  **Nishinomiya-shi**
  **Hyogo 662-0867 (JP)**
• **SUZUKI, Nobuji**
  **Nishinomiya-shi**
  **Hyogo 662-0867 (JP)**
• **INOUE, Kunikazu**
  **Nishinomiya-shi**
  **Hyogo 662-0867 (JP)**
• **MORIWAKI, Kazuki**
  **Nishinomiya-shi**
  **Hyogo 662-0867 (JP)**

(74) Representative: **Sajda, Wolf E.**
  **Meissner Bolte Patentanwälte**
  **Rechtsanwälte Partnerschaft mbB**
  **Postfach 86 06 24**
  **81633 München (DE)**

(56) References cited:
EP-A1- 2 477 197     WO-A1-95/22239
JP-A- S63 259 991    JP-A- 2002 280 154
JP-A- 2004 335 324   JP-A- 2009 164 012
JP-A- 2010 033 885   JP-A- 2012 164 606

**Description**

Technical Field

The present invention relates to an induction heating coil and an induction heating system using thereof.

Background Art

An induction heating coil used in a conventional induction heating system such as an IH cooker is formed by spirally winding so-called a litz wire around a coil axis, which is made for example by nineteen of twisted cooper wires (e.g., 0.3 mm diameter) covered by resin.

Patent Document 1 (JP H10-321 358 A) suggests reduction of loss of the heating coil by means of the induction heating coil structured by forming a first twisted litz wire with thinner element wires, a second twisted litz wire with the first twisted litz wires, and a third twisted litz wire with the second twisted litz wires, which has a structure of multi-layered of twisted wires.

Patent Document 2 (JP 4 491 983 B) discloses another induction heating coil formed by spirally winding a collected wire instead of the litz wire, which is formed by laminating a plurality of conducting layers having a substantially rectangular or oblong cross-section in a direction parallel to the coil axis while being electrically separated from one another.

More specifically, the induction heating coil of Patent Document 2 is configured to switch the positions of the conducting layers of the collected wire from the inner side to the outer side in the wound coil in order to homogenize current distribution which otherwise is likely concentrated or localized in the inner conducting layer of the collected wire due to the intrinsic deflection, thereby to reduce the loss.

Switching the positions of the conducting layers of the collected wire in the wound coil is generally referred to as "transition" hereinafter. Thus Patent Document 2 discloses the heating coil extended in the height direction perpendicular to the width in a coil radial direction (horizontal direction), and two or three of the heating coils mounted over the other in the height or vertical direction, wherein the positions of some of the collected wires are switched or transited so as to reduce the loss due to the intrinsic deflection.

Patent Document 3 (WO 95/22239 A1) is considered to be relevant prior art and discloses an induction heating element. The heating element for an inductive cooking hob comprises a flat spirally-wound coil consisting of a plurality of parallel insulated conductors. The coil is wound in a spirally-extending groove disposed on the upper surface of a plastics former. A circular base of highly magnetically permeable material is disposed on the underside of the former. The base focuses the magnetic field generated by the coil into a heating area above the coil, and also prevents any surrounding metalwork from inadvertently being heated.

Summary of the Invention

Problems to be Solved by the Invention

In case where the induction heating coil formed with the litz wires as taught in Patent Document 1 is used as a heating source for an induction heating system, especially for an IH cooker, it is generally required to minimize the gap between the induction heating coil and a top plate on which a heated body such as a pan is seated, to improve the heating efficiency for the pan. According to the conventional induction heating system, in order to cool down the whole of the induction heating coil that is heated during operation, the induction heating coil is configured to receive cooling air typically from the underside thereof that is the opposite side facing to the top plate. However, since it is not easy to guide the cooling air into the gap between the induction heating coil and the top plate, a top surface of the induction heating coil tends to have higher temperature.

Due to the skin effect, high-frequency current caused by high-frequency voltage applied across the induction heating coil tends to concentrate in a vicinity of a surface of a conductor, although the extent of concentration is dependent upon the frequency thereof. This increases the amount of Joule heat generated close to the top surface more than that close to the bottom surface, and therefore makes it more difficult to efficiently cool down the top surface of the induction heating coil.

Also since the vertical thickness of the induction heating coil formed with the twisted bundle of the litz wires corresponds to the minimum height required for the litz wires, substantial thickness thereof is to be ensured for sufficient amount of the high-frequency current. This eventually inhibits effective thermal conduction from the top surface to the bottom surface of the induction heating coil.

Furthermore the litz wire is made of metal conducting wire covered by insulating material such as resin which is much poorer in thermal conduction than the metal conducting wire, and substantial number of the plurality of insulating layers and conductive layers are laminated, thereby to inhibit effective thermal conduction between the top surface and the bottom surface of the induction heating coil.

Patent Document 1 discloses the induction heating coil formed by further twisting the twisted bundle of the litz wires to shift the arrangement of the conducting wires, thereby to improve the cooling efficiency and current homogenization between the top and bottom surafaces of the induction heating coil. However using the twisted bundle of the litz wires makes it difficult to manage or control misalignment and gap between the twisted bundles of the litz wires caused when forming the induction heating coil, and thus causes deviation in dimension of the wound induction heating coil, deteriorating dimensional accuracy of the completed product of the induction heating coil.

In the meanwhile, Patent Document 2 discloses the induction heating coil composed of the collected layers each of which includes the conducting layers of a substantially rectangular or oblong cross-section extending in a direction parallel to the coil axis and the insulating layers sandwiched therebetween, which improves the thermal conduction between the top and bottom surface of the induction heating coil when compared to that composed of the litz wires and the complicated insulating material.

However, even though the collected wire having the conducting layers laminated in the coil radial direction, the heat amount generated close to the top surface is greater than that close to the bottom surface of the induction heating coil due to a skin effect. Also especially when two or three of the heating coils are mounted over the other in the vertical direction, the thermal conduction from the uppermost surface to the lowermost surface is substantially inhibited, and therefore it is difficult to maintain the temperature of the induction heating coils less than a predetermined maximum driving temperature thereof.

Also as discussed above for the litz wires, if two or more collected wires are mounted in the vertical direction and each of them is twisted or transited, then the spiral configuration thereof is deteriorated and thus it is more difficult to manufacture the completed product of the induction heating coil with dimensional precision as required by a standard and at a reasonable production cost.

To address the aforementioned drawbacks, one of the present inventions is to provide an induction heating coil which improves the cooling efficiency thereof as a whole while easily being manufactured in a more simple production steps. Also one of the present inventions is to provide the induction heating coil which maintains the dimensional accuracy of the completed product at a reasonable cost while keeping it light in weight, and reduces impedance thereof.

Means for Solving Problems

One of aspects of the present invention is to provide an induction heating coil formed by spirally winding an elongate laminated conductor around a coil axis. The elongate laminated conductor includes a plurality of conducting layers extending in an elongate direction and a plurality of insulating layers formed between the conducting layers, each of the conducting layers is connected in parallel with one another at both ends of the elongate laminated conductor, and the conducting layers are laminated in a direction perpendicular to the coil axis around which the elongate laminated conductor is wound. In the induction heating coil, the elongate laminated conductor has a width (W) along the direction perpendicular to the coil axis is greater than a height (H) along the direction parallel to the coil axis.

Advantages of the Invention

According to one of aspects of the present invention, the induction heating coil is configured to so that the elongate laminated conductor has a width (W) along the direction perpendicular to the coil axis is greater than a height (H) along the direction parallel to the coil axis, thereby to achieve a light and inexpensive induction heating coil which improves the cooling efficiency and reduce impedance deviation thereof while being easily manufactured with high dimensional precision.

Brief Description of the Drawings

FIG. 1              is an overall perspective view of an induction heating system such as an IH cooker incorporating an induction heating coil according to the present invention.

FIG. 2              is a cross-sectional view of the induction heating system taken along a line of II-II line of FIG. 1.

FIG. 3              is a top plan view of the induction heating coil according to the first embodiment.

FIG. 4              is a perspective view of a laminated conductor prior to being wound to form the induction heating coil.

FIG. 5A            is a cross-sectional view of the laminated conductor taken along a radial vertical plane, and

FIG. 5B            is a cross-sectional view showing one conducting layer and insulating layers composing the laminated conductor.

FIG. 6          is a cross-sectional view of the induction heating coil taken along a line VI-VI of FIG. 3.

FIG. 7          is a graph showing a relationship between height of the induction heating coil and current density running therethrough.

FIG. 8          is a graph showing a relationship between height of the induction heating coil and heat amount generated thereby.

FIG. 9          is a graph showing a relationship between height of the induction heating coil and temperature of a top surface thereof.

FIG. 10         is a cross-sectional view of the laminated conductor showing areas where current is concentrated.

FIG. 11         is a cross-sectional view of the induction heating coil formed by winding the laminated conductor by eight turns around the coil axis.

FIGS. 12A-12E    are cross-sectional views of the induction heating coils according to the third embodiment.

FIG. 13         is a top plan view of the induction heating coil according to a variation of the first embodiment.

FIG. 14         is a top plan view of the induction heating coil according to the fourth embodiment.

FIG. 15         is a cross-sectional view, similar to FIG. 2, of the induction heating system according to the fourth embodiment.

FIG. 16         is a top plan view of the induction heating coil according to a variation of the fourth embodiment.

FIG. 17         is a top plan view of the induction heating coil according to the fifth embodiment.

Description of Embodiments

Referring to attached drawings, embodiments of an induction heating coil according to the present invention will be described herein. In the description, a couple of terms for indicating the directions (for example, "upper", "lower", "X-direction", "Y-direction" or "Z-direction", etc.) are conveniently used just for facilitating clear understandings, and thus it should not be interpreted that those terms limit the scope of the present invention. Also it should be noted that the present specification refers a direction parallel to a coil axis of the induction heating coil as the Z-direction.

Embodiment 1.

Although the induction heating coil 10 according to the first embodiment may be adapted to any types of heating systems, the present disclosure will describe, as a typical example, the induction heating coil 10 adapted to an induction heating system 1 such as an IH cooker.

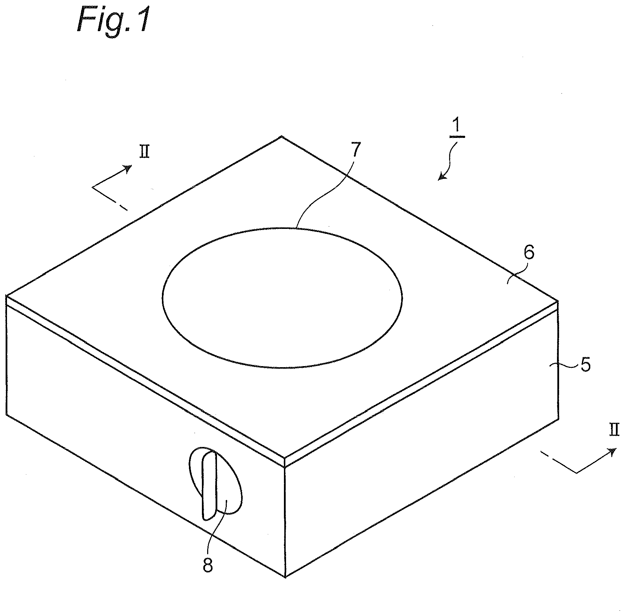

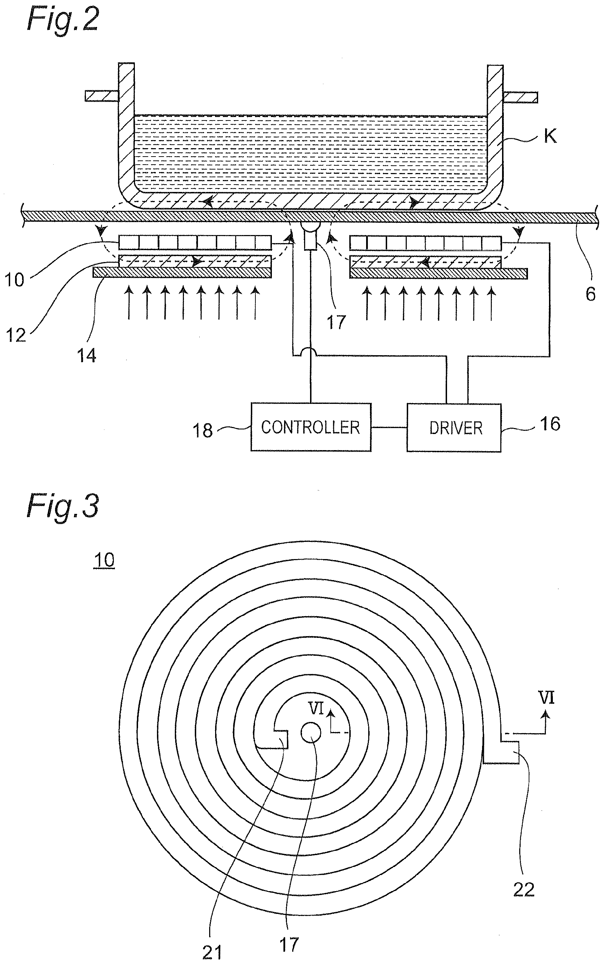

FIG. 1 is an overall perspective view of the induction heating system 1 such as the IH cooker incorporating an induction heating coil according to the present invention. FIG. 2 is a cross-sectional view of the induction heating system 1 taken along a line of II-II line of FIG. 1. FIG. 3 is a top plan view of the induction heating coil 10. The induction heating system 1 shown in FIG. 1 includes, in general, a housing 5, a top plate 6 mounted thereon and made of tempered glass, an induction heating device 7, and an adjustment knob 8 for allowing a user to adjust heating power.

As illustrated in FIG. 2, the induction heating device 7 according to the first embodiment includes the induction heating coil 10 (FIG. 3) arranged beneath the top plate 6 within the housing 5, a plurality of ferrite members (high permeability members) 12 extending in a radial direction, a coil platform 14 supporting the induction heating coil 10 and the ferrite members 12 in a stable manner, and a thermal sensor 17 detecting temperature of an underside of the top plate 6. Also the induction heating system 1 includes a driving circuitry (e.g., an inverter circuitry) 16, and a control circuitry (e.g., a controller) 18 for controlling the driving circuitry 16 to supply an appropriate high-frequency voltage across the induction heating coil 10 in accordance with the heating power set by the adjustment knob 8 and the real-time temperature detected by the thermal sensor 17.

Also schematically illustrated in FIG. 2 is a magnetic metal pan (a heated body, which is referred to simple as a "pan") K seated on the top plate 6, in which cooking ingredient to be heated is received. The induction heating system 1 is structured to heat the pan K in an efficient manner when the induction heating coil 10 supplied with high-frequency current generates a consecutive closed loop of high-frequency magnetic field around the pan K and the ferrite members 12 as shown by a dotted line of FIG. 2, which in turn generates eddy current within the pan K thereby heating it in an effective manner.

In general, in order to improve the heating efficiency for the pan K, the distance between the pan K and the induction heating coil 10 is to be minimized, and therefore, the gap between the induction heating coil 10 and the top plate 6 should preferably be minimized. On the other hand, the induction heating coil 10 may be heated up to substantial temperature from various heat sources that includes the Joule heat (copper loss) of the heating coil 10 generated by the high-frequency current supplied thereto for heating the pan K (the coil resistance), radiation heat from the heated pan K through the top plate 6, and radiation heat from the ferrite members 12 which are heated the Joule heat (iron loss) of the heating coil 10. In order to cool down the induction heating coil 10, a typical induction heating system 1 includes a cooling fan (not shown) for blowing air to the induction heating coil 10 (and the ferrite members 12) from the lower surface thereof so that the temperature of the induction heating coil 10 is kept less than the allowable operating temperature.

As discussed above, however, the gap between the induction heating coil 10 and the top plate 6 is designed to be minimized for improving the heating efficiency for the pan K, and therefore, a small portion of the cooling air from the cooling fan blows along the top surface of the induction heating coil 10, which causes the induction heating coil 10 heated up to substantial temperature. Therefore it is desired to further improve the cooling efficiency for the induction heating coil 10.

Now the structure of the induction heating coil 10 will further be described in detail. FIG. 3 is a top plan view of the induction heating coil 10 with the top plate 6 removed from the induction heating system 1. The induction heating coil 10 is formed by spirally winding an elongate laminated conductor 20 around the coil axis (Z-axis) and has terminals 21, 22 at both ends of the laminated conductor 20.

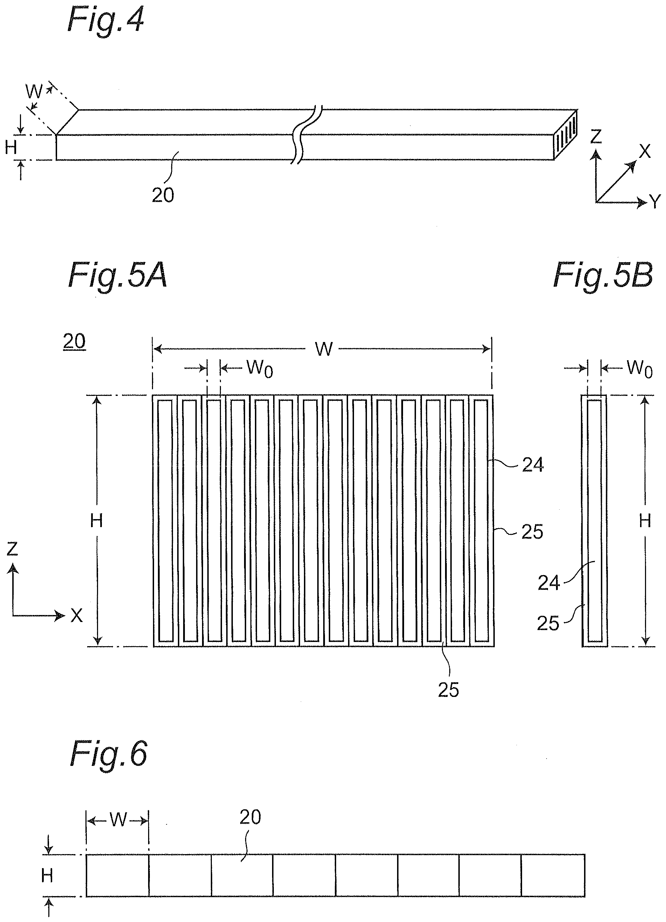

FIG. 4 is a perspective view of the elongate laminated conductor 20 before being spirally wound to form the induction heating coil 10. FIG. 5A and 5B are cross-sectional views of the laminated conductor 20 taken along a vertical plane (XZ-plane of FIG. 4). The laminated conductor 20 includes a plurality of electric conducting layers 24 and electric insulating layers 25 intervened therebetween extending in an elongate direction thereof. Each of the conducting layers is made of relatively cost-reasonable metal of high electric conductivity such as copper, aluminum, or alloy thereof to have high electric conductivity.

Thus, the electric conducting layers 24 are isolated from each other and preferably encompassed by the electric insulating layer 25, so as to be exposed only at both of the terminals 21, 22 corresponding to a winding start and a winding end of the induction heating coil 10 would around the coil axis, respectively (FIG. 3). It should be noted that although each of the electric conducting layers 24 shown in FIG. 5 has a rectangular cross-section, it may have an oblong cross-section as well.

FIG. 5A is a cross-sectional view of the laminated conductor 20 taken along a radial vertical plane, and FIG. 5B is a cross-sectional view showing one conducting layer 24 and insulating layers 25 composing the laminated conductor 20. In the laminated conductor 20 illustrated in FIGS. 5A and 5B, each of the conducting layer 24 has width of 0.1 mm in a direction perpendicular to the coil axis (X-direction) and height of 1.36 mm in a direction parallel to the coil axis (Z-direction), and each of the insulating layers 25 has the width and the height of 0.02 mm in the X- and Z-directions so as to encompass the fourteen layers of the conducting layers 24.

The laminated conductor 20 may have the total width W of 1.96 mm in the X-direction and the total height H of 1.40 mm. Since each of the conducting layers 24 extends along the coil axis (Z-direction), heat generated in the vicinity of the upper surface of the induction heating coil 10 that is spirally wound around the coil axis (Z-direction) is promptly transferred to the lower surface through the conducting layers 24, and therefore, it is possible to efficiently cool down the whole of the induction heating coil 10 by blowing the cooling air onto the lower surface thereof. FIG. 6 is a schematic cross-sectional view of the induction heating coil 10 taken along a line VI-VI of FIG. 3, and the induction heating coil 10 is formed by winding the laminated conductor 20 by eight turns around the coil axis.

For each of the conducting layers 24 and the insulating layers 25, the width in the X-direction, the height in the Z-direction, and the number of turns may not be limited as indicated above, however it should be noted that according to the embodiment of the present invention, the laminated conductor 20 is designed to have the width W in the X-direction greater than the height in the Z-direction H (W > H) so that heat generated in the vicinity of the upper surface of the induction heating coil 10 is promptly transferred to the lower surface which can easily be cooled down, thereby improving the cooling efficiency of the induction heating coil 10.

When the induction heating coil 10 has the diameter D and the number of turns (N turns), the total width W in the X-direction of the laminated conductor 20 cannot be greater than the radius (D/2) of the induction heating coil 10 divided by the number of turns (N). For example, when the induction heating coil 10 has the diameter D of 180 mm and twenty-two turns (N = 22), the total width W in the X-direction of the laminated conductor 20 is calculated as (180/2)/22, that is, about 4 mm or less.

Also as will be described herein, each of the conducting layers 24 of the laminated conductor 20 may preferably be designed to have the width $W_0$ that is greater than the one-twentieth (1/20) of the total height H in the Z-direction of the laminated conductor 20, therefore, when the total height H in the Z-direction of the laminated conductor 20 is 2 mm, each of the conducting layers 24 has the width $W_0$ of 0.1 mm or greater.

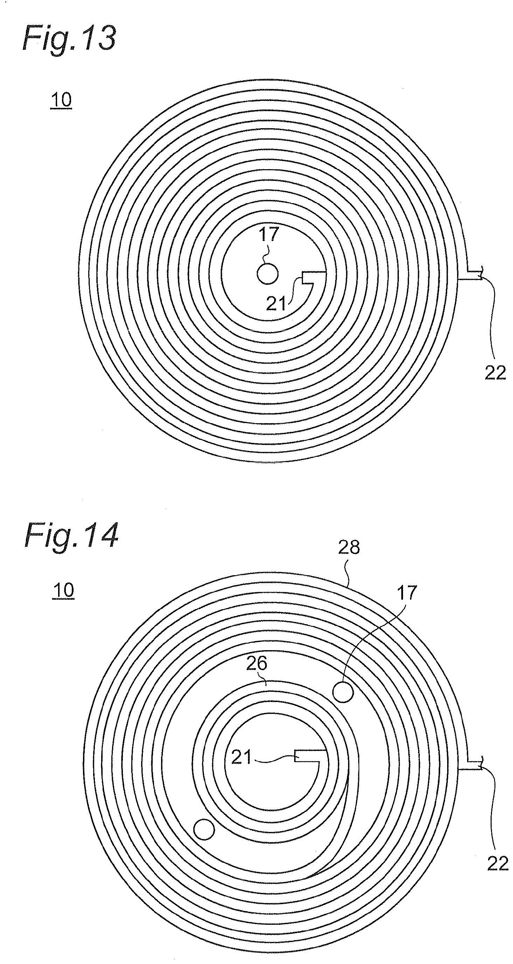

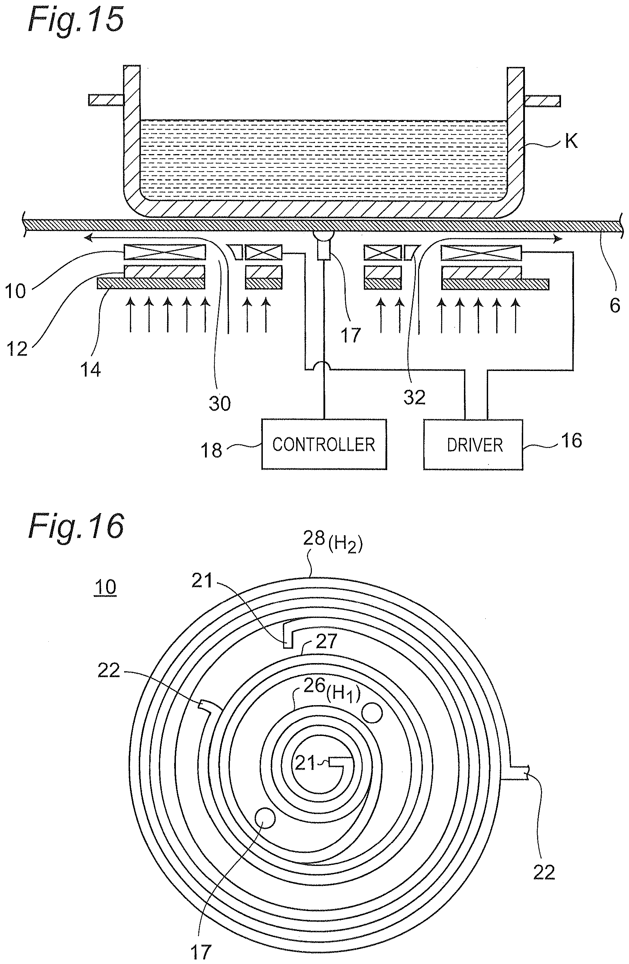

However in practice, since the induction heating coil 10 may include a void space as shown in FIGS. 14 and 16 to secure a space for arranging the thermal sensors 17 and to avoid concentration of magnetic flux that causes uneven heating of the pan K, the area where the laminated conductor 20 is wound may often be two-thirds of the total area of the induction heating coil 10. For example, if the induction heating coil 10 has the radius of 90 mm and the laminated conductor 20 is wound by twenty-two turns (N = 22) in the area of two-thirds of the total area thereof, then the total width W in the X-direction of the laminated conductor 20 would be about 2.7 mm (= 60/22).

On the other hand, while the laminated conductor 20 may be formed by alternately aligning the conducting layer 24 and insulating layer 25 as described above, it may be produced by alternately depositing a thin film of conducting material (corresponding to the conducting layer 24) and another thin film of insulating material (corresponding to the insulating layer 25) by means of the metal evaporation or the sputtering technique.

It should be noted that the litz wires disclosed in aforementioned Patent Document 1 is poor in thermal conduction in the vertical direction because of substantial amount of insulating material therewith, and also the cooling air cannot be guided onto the upper surface of the induction heating coil 10 through the minimum flow path, resulting the insufficient cooling efficiency. On the contrary to this, according to the present invention, even though the induction heating coil 10 is arranged close to the top plate 6 to improve the heating efficiency for the pan K and the cooling air is blown from the lower surface of the coil platform 14, the laminated conductor 20 is designed to have the total width W in the X-direction which is greater than the total height H in the Z-direction so as to cool down the whole of the induction heating coil 10 in an efficient manner.

Embodiment 2.

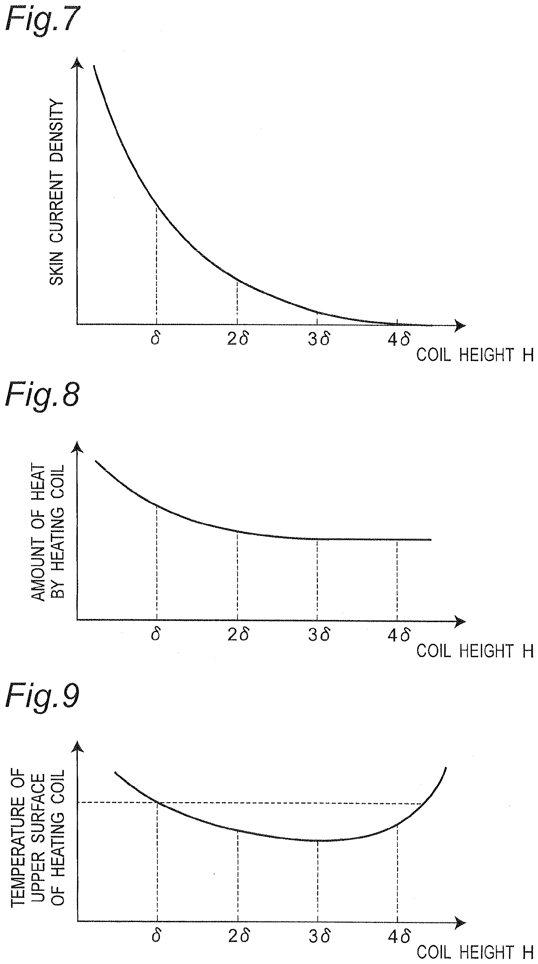

Referring to FIGS. 7-9, the second embodiment of the induction heating coil 10 according to the present invention will be described herein. The induction heating coil 10 of the second embodiment is similar to that of the first embodiment except that the laminated conductor 20 has the total height H which is designed to be four times or less of a skin depth $\delta$. Therefore, the duplicated description in detail for the common features will be eliminated.

In general, a skin effect is referred as a phenomenon that a conductor supplied with a high-frequency current has greater current density as being closer to a surface and less current density as being farther away from the surface. The current density J of the conductor is expressed with a parameter of the depth $\delta$ as a following formula.

$$\underline{\text{Formula } 1}$$

$$J = J_0 \cdot \exp(\delta / d)$$

wherein "d" denotes the depth from the surface of the conductor. The skin depth $\delta$ is referred to as the depth where the high-frequency current is reduced to 1/e ("e" is the base of natural logarithm, i.e., 1/e = 36.8 %) of the surface current. More specifically, if "$\rho$" denotes the electric resistance of the conducting layer 24, "f" denotes the frequency of the high-frequency voltage (or the high-frequency current), "$\mu$" denotes the magnetic permeability of the conducting layer 24, and "$\sigma$" denotes the electric conductivity of the conducting layer 24, then the skin depth $\delta$ may be calculated with the following formula.

$$\underline{\text{Formula } 2}$$

$$\delta = \sqrt{\frac{\rho}{\pi \cdot f \cdot \mu}} = \sqrt{\frac{1}{\pi \cdot f \cdot \mu \cdot \sigma}}$$

As mentioned above, it is preferable that the conducting layer 24 is made of inexpensive metal such as copper, aluminum, and the alloy thereof, of which electric conductivity $\sigma$ is high.

When the conducting layer 24 is made of copper for example, as its electric conductivity $\sigma$ is about $58.1 \times 10^6$ S/m, the skin depth $\delta$ would be 0.467 mm at the frequency of 20 kHz, and 0.418 mm at the frequency of 25 kHz.

Thus the current running through the conducting layer 24 of the induction heating coil 10 is distributed as expressed by an exponential function with a parameter of the coil height H. If the frequency is 20 kHz, the current within the conducting layer 24 would be 1/e (about 36.8 %) of the surface current at the skin depth $\delta$ from the upper surface, $1/e^2$ (about 13.5 %) of the surface current at the double skin depth $2\delta$ from the upper surface, and $1/e^3$ (about 5.0 %) of the surface current at the triple skin depth $3\delta$ from the upper surface. FIG. 7 is a graph showing a relationship between the coil height H of the induction heating coil 10 (i.e., the distance away from the upper surface) in the horizontal axis and the current density J in the vertical axis.

In connection with FIG. 7, a plurality of the induction heating coils 10 are prepared having the height H different from each other, and the amount of heat (Joule heat or copper loss) caused by the coil resistance of each of the induction heating coils 10 is measured with the same driving conditions, thereby to obtain the graph shown in FIG. 8.

As the height H of the conducting layer 24 is greater, the electric resistance $\rho$ thereof is smaller, which in turn reduces the amount of heat generated by the induction heating coil 10. However when the height H of the induction heating coil 10 is of three times of the skin depth $\delta$ ($3\delta$) or more, because the current density J is extremely reduced, the amount of heat generated by the induction heating coil 10 is substantially unchanged.

In other words, it is sufficient to design the height H of the induction heating coil 10 as about three times of the skin depth $\delta$ ($3\delta$) in order to maintain the amount of heat generated by the induction heating coil 10 at a predetermined value or less, and the greater height H may lead an disadvantage which increase the cost and weight required for the material composing the induction heating coil 10.

Furthermore, several types of the induction heating coils 10 are made having the total height H in the Z-direction, which is different from each other, and the temperature at the upper surface of the induction heating coils 10 is measured, thereby to obtain the graph shown in FIG. 9. Similar to FIG. 8, as the height H of the conducting layer 24 is greater, the electric resistance $\rho$ thereof is smaller, which in turn reduces the amount of heat generated by the induction heating coil 10. As mentioned above, while the induction heating coils 10 is cooled down by cooling air blown onto the lower surface thereof, the upper surface of the induction heating coil 10 is less effectively cooled down because of the increased height H of the conducting layer 24.

Thus when the height H of the conducting layer 24 exceeds three times of the skin depth $\delta$ ($3\delta$), the temperature at the upper surface of the induction heating coil 10 is rather increased. Since the graph showing the temperature at the upper surface of the induction heating coil 10 has the local minimum point at about three times of the skin depth $\delta$ ($3\delta$), it is sufficient to design the height H of the conducting layer 24 as about three times of the skin depth $\delta$ ($3\delta$), in order to achieve the reasonable, light and thin induction heating coil 10 while minimizing the component material of the induction heating coil 10 and maintaining the temperature at the upper surface thereof low enough.

In the meanwhile, each of the induction heating coils 10 shown in FIG. 5 has the width $W_0$ in the X-direction and the height H in the Z-direction (the direction parallel to the coil axis), in which the width $W_0$ is preferably one-twentieth or more of the height H ($W_0 / H \geq 1/20$). This comes from the fact that for example, when a metal element having cross-section of a circular is pressed to form a rectangular conducting layer 24, a draft ratio (i.e., a ratio of the metal thickness after over before pressed) would preferably be in a range about between 1/10 through 1/20 for the metal element that would be mainly composed of copper, and in a range about between 1/3 through 1/6 for the metal element that would be mainly composed of aluminum.

If the draft ratio is used beyond the above-identified ranges, the metal element is less available from a supplier and a production cost for forming the conducting layer 24 by pressing is increased, which raises substantially the manufacturing cost of the laminated conductor 20. Advantageously the manufacturing cost of the laminated conductor 20 can be reduced by designing the width $W_0$ greater than one-twentieth of the height H of the conducting layer 24, or by designing the height H of twenty times or less of the width $W_0$.

For example, the conducting layer 24 having the width $W_0$ of 0.2 mm (in the X-direction) may be designed to have the height H of 4 mm or less. On the other hand, when the high-frequency current has the frequency of 20 kHz and the skin depth $\delta$ of the conducting layer 24 made of copper is 0.467 mm as calculated above, if the width $W_0$ of the conducting layer 24 is set as 0.2 mm, the height H in the Z-direction would be 4 mm (= 0.2 mm x 20 times) at most which is about 8.5 times of the skin depth $\delta$ (= 4 mm / 0.467 mm). Also if the height H of the conducting layer 24 is designed as three times of the width $W_0$, the height H would be 0.6 mm which is about 1.3 times of the skin depth $\delta$ (= 0.6 mm / 0.467 mm).

However, if the height H of the conducting layer 24 (the heating coil) is designed as four times or more of the skin depth $\delta$ as shown in FIG. 8, the amount of heat caused by the coil resistance of the induction heating coil 10 converges to the constant value, and the manufacturing cost of the induction heating coil 10 is raised due to the increased volume of copper composing the conducting layer 24. Therefore it is sufficient to design the conducting layer 24 to have the height H which is about four times of the skin depth $\delta$ at most.

The induction heating coil 10 incorporated into the induction heating cooker 1 shown in FIG. 1 will be further discussed herein. According to laws and regulations in Japan, the frequency f of the high-frequency current used for the induction heating cooker is restricted in a range between 20 kHz and 100 kHz. When the conducting layer 24 is composed of copper, the skin depth $\delta$ may vary in a range between 0.209 mm (100 kHz) and 0.467 mm (20 kHz). Thus the height H of the conducting layer 24, which is designed as four times of the skin depth $\delta$, may vary between 0.836 mm and 1.868 mm corresponding to the range of the skin depth $\delta$.

As discussed above, according to the present invention, the laminated conductor 20 is structured to have the width W in the X-direction greater than the height in the Z-direction H (W > H) to improve the cooling efficiency of the induction heating coil 10, while the width W of the laminated conductor 20 is designed as 1.868 mm or greater when the high-frequency current has the frequency f of 20 kHz, and as 0.836 mm or greater when the high-frequency current has the frequency f of 100 kHz.

Thus according to the present invention, the width W of the laminated conductor 20 is structured to be greater than about 1.9 mm (when the high-frequency current has the frequency f of 20 kHz) and less than the radius of the induction heating coil 10 divided by the number of turns N (= D / (2N), D: diameter of the induction heating coil 10).

In case where the conducting material is made of copper, while the skin depth $\delta$ may vary between 0.209 mm (at 100 kHz) and 0.467 mm (at 20 kHz), and as mentioned above, if the predetermined range of the width $W_0$ over the

height H ($W_0$ / H) of the laminated conductor 20 is set ($1/20 \leq$ ($W_0$ / H) $\leq 1/10$), the width $W_0$ of the conducting layer 24 may vary between 0.042 mm and 0.093 mm (when $W_0$ / H = 1/20) and between 0.083 mm and 0.187 mm (when $W_0$ / H = 1/10). When considering the actual range of the frequency f of the high-frequency current, the width $W_0$ of the conducting layer 24 is preferably set about between 0.08 mm and 0.2 mm.

Yet, if the width $W_0$ of the conducting layer 24 is too small, then the cross section of the conducting layer 24 taken along the XZ-plane of FIG. 4 is also small which increases the resistance and power loss thereof, and therefore, it is preferable to increase the laminating number of the conducting layers 24. It is more preferable to select the width $W_0$ of the conducting layer 24 upon taking consideration into usage amount of material composing the conducting layer 24 and reduction of the laminating steps thereof.

As above, according to the second embodiment, the height H of the conducting layer 24 is designed as four times of the skin depth $\delta$ calculated by the aforementioned [Formula 2] so as to achieve a light and thin induction heating coil which substantially improves the cooling efficiency and minimizes the manufacturing cost thereof.

Embodiment 3.

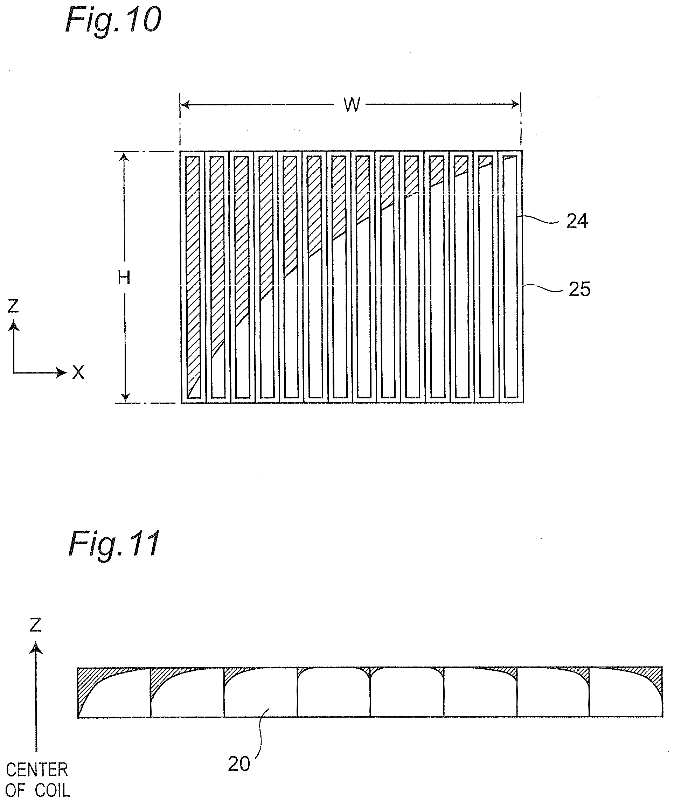

Referring to FIGS. 10-12, the third embodiment of the induction heating coil 10 according to the present invention will be described herein. The induction heating coil 10 of the third embodiment is similar to that of the first or second embodiment except that at least one of the conducting layers 24 composing the laminated conductor 20 has the height H greater than the other conducting layers 24. Therefore, the duplicated description in detail for the common features will be eliminated.

FIG. 10 is a cross-sectional view similar to FIG. 5, of the laminated conductor 20 located closest to the center of the induction heating coil 10, showing with hatchings, areas of the conducting layers 24 where the current is concentrated. Thus FIG. 10 illustrates the current having a predetermined value or more running through the hatched areas of the conducting layers 24. Also FIG. 11 is a cross-sectional view similar to FIG. 6, of the induction heating coil 10 which is formed by winding the laminated conductor 20 by eight turns around the coil axis, showing with hatchings, areas of the laminated conductor 20 where the current is concentrated.

As illustrated in FIGS. 10 and 11, the innermost portion of the laminated conductor 20 within the induction heating coil 10 has the concentrated current through the conducting layer 24 closer to the coil axis (the center of the coil), while the outermost portion of the laminated conductor 20 within the induction heating coil 10 has the concentrated current through the conducting layer 24 closer to the circumference thereof.

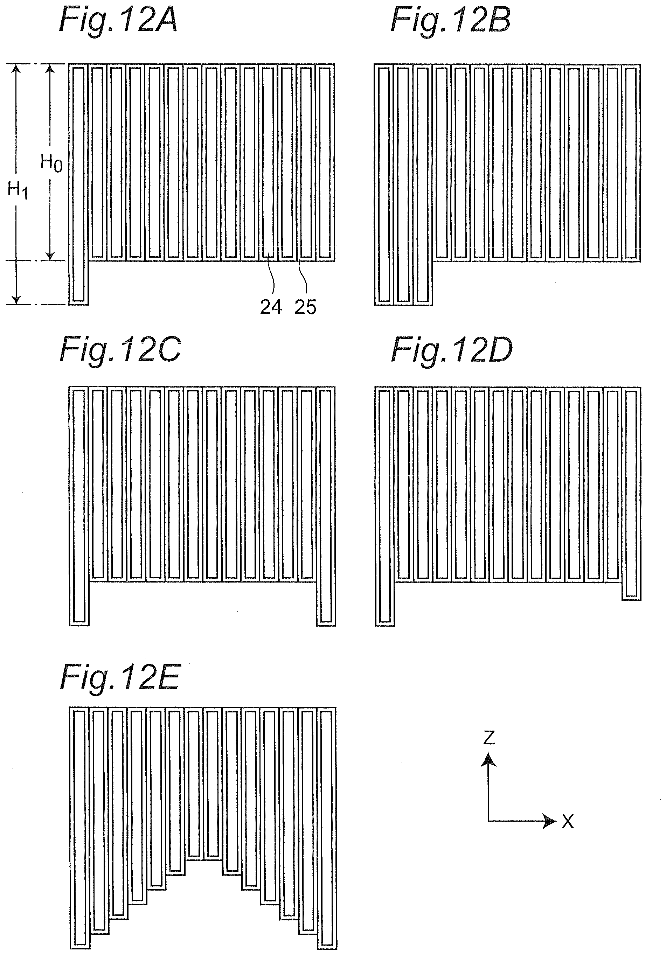

As shown in FIG. 11, in any portions of the laminated conductor 20 within the induction heating coil 10, more current tends to run through the innermost or outermost conducting layers 24 to generate more Joule heat (copper loss). According to the third embodiment, the induction heating coil 10 is structured so that at least one innermost conducting layer 24 (and the insulating layers 25 sandwiching it) extends downward beyond the other conducting layers 24 as illustrated in FIGS. 12A and 12B, thereby to perform a heat sink for efficiently receiving the cooling air blown from the lower surface of the induction heating coil 10. Thus according to the third embodiment, the induction heating coil 10 is configured to extend the conducting layer 24 generating more heat beyond the others so as to receive the cooling air on the extended surfaces thereof, thereby improving the cooling efficiency.

More specifically, the induction heating coil 10 is configured to have the upper surface of the conducting layers 24 flush at a given level, and the inner conducting layer 24 having the height $H_1$ greater than the height $H_0$ of the remaining conducting layers 24 while the height $H_1$ is still set as four times or less of the skin depth $\delta$. This achieves the induction heating coil 10 which improves the cooling efficiency and saves the component material to reduce production cost and weight. Concrete dimensions such as the height $H_0$ and $H_1$ may be determined in accordance with expected cooling efficiency, reduction of component material cost, and reduction of weight.

Also the induction heating coil 10 may be configured so that the innermost and outermost conducting layers 24 (and the insulating layers 25 sandwiching them) extend downward beyond the other conducting layers 24 as illustrated in FIGS. 12C and 12D, thereby to perform the heat sink for efficiently receiving the cooling air blown from the lower surface of the induction heating coil 10.

Furthermore the induction heating coil 10 as shown in FIG. 12E may be configured so that the innermost conducting layer 24 has the greatest height among others, the remaining conducting layers 24 have the stepwise (gradual) reduced heights towards the middle thereof, and then have the stepwise (gradual) increased heights towards the outermost conducting layer 24. This structure allows the conducting layers 24 to extend over the areas only where the current likely concentrate, which in turn achieves a light and thin induction heating coil that substantially improves the cooling efficiency and minimizes the manufacturing cost thereof.

Embodiment 4.

Referring to FIGS. 13-16, the fourth embodiment of the induction heating coil 10 according to the present invention will be described herein. The induction heating coil 10 of the fourth embodiment is similar to that of the first, second or third embodiment except that the induction heating coil 10 is wound to have a gap 30 between the adjacent laminated conductors 20. Therefore, the duplicated description in detail for the common features will be eliminated.

While FIG. 3 shows the induction heating coil 10 formed by winding the laminated conductor 20 by eight turns, FIG. 13 shows the induction heating coil 10 formed by winding the laminated conductor 20 by fifteen turns. However, the laminated conductor 20 shown in FIG. 13 has the basic structure similar to that shown in FIG. 3, and thus third embodiment is a variation of the first embodiment. The induction heating coil 10 of FIG. 13 is formed by spirally winding the laminated conductor 20 around the coil axis (Z-axis) to have the inner terminal 21 and the outer terminal 22. In addition, arranged in the center of the induction heating coil 10 is a thermal sensor 17 for detecting temperature of the underside of the top plate 6.

FIG. 14 is a top plan view of the induction heating coil 10 according to the fourth embodiment. This induction heating coil 10 includes an inner heating member 26 and an outer heating member 28 both formed by winding the laminated conductor 20 around the coil axis (Z-axis) with a gap 30 therebetween. Also this induction heating coil 10 includes the inner terminal 21 and the outer terminal 22 similar to those of the first, second, and third embodiments, and the induction heating system 1 is provided beneath the top plate 6 with a pair of thermal sensors 17 such as thermistors and infrared sensors.

Although not shown, another thermal sensor 17 may be provided in the center of the inner heating member 26. A plurality of thermal sensors 17 may be arranged so that the control circuitry 18 enhances the accuracy of thermal detection and the safety for the induction heating system 1, and controls the driving circuitry 16 to supply the high-frequency current with the induction heating coil 10 in a reliable manner.

The induction heating system 1 containing the induction heating coil 10 so structured can improve the accuracy of thermal detection for the pan K. Also it is configured to blow the cooling air from the underside of the induction heating coil 10 so as to cool down the inner heating member 26 and the outer heating member 28 with the cooling air flowing through the gap 30 therebetween. Furthermore, provision of the gap between the inner heating member 26 and the outer heating member 28 allows the magnetic field distribution generated by the whole of the induction heating coil 10 to be homogenized in the radial direction, thereby to heat the pan K in a uniform manner.

FIG. 15 is a cross-sectional view, similar to FIG. 2, of the induction heating system 1 according to the fourth embodiment. The induction heating coil 10 of FIG. 15 includes a deflecting member 32 which guides the cooling air through the gap 30 to the upper surface of the outer heating member 28. This deflecting member 32 allows the cooling air to be guided directly onto the upper surface of the outer heating member 28, thereby substantially improving the cooling efficiency of the induction heating coil 10.

It should be noted that the laminated conductor 20 composing the induction heating coil 10 according to the fourth embodiment is also preferably designed to have the height H less than the width W (W > H).

Alternatively the induction heating coil 10 may include an inner heating member 26, a middle heating member 27, and an outer heating member 28 each formed by winding a train of the laminated conductor 20 around the coil axis (Z-axis) as shown in FIG. 16. This allows further improvement of the cooling efficiency of the induction heating coil 10, and enhances further homogenization in the radial direction of the magnetic field distribution to heat the pan K in a more uniform manner. As clear for a person skilled in the art, the gap may be replaced by a slit for achieving similar results.

Likewise, the laminated conductor 20 composing the induction heating coil 10 shown in FIG. 16 may be configured to have the height H less than the width W (W > H), and the induction heating coil 10 may be configured to have the heights of the inner heating member 26 and the outer heating member 28 different from each other. This achieves a reasonable and light induction heating coil 10 which improves the cooling efficiency thereof.

Embodiment 5.

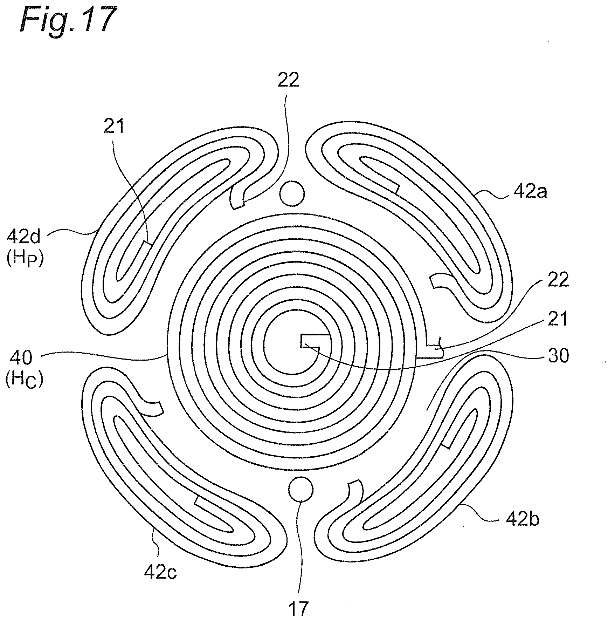

Referring to FIG. 17, the fifth embodiment of the induction heating coil 10 according to the present invention will be described herein. The induction heating coil 10 of the fifth embodiment is similar to that of the first, second, third or fourth embodiment except that the induction heating coil 10 of fifth embodiment includes a plurality of induction heating coils which are not concentrically wound while the induction heating coil 10 of fourth embodiment includes a plurality of concentrically wound heating members such as the inner heating member 26 and the outer heating member 28. Therefore, the duplicated description in detail for the common features will be eliminated.

FIG. 17 is a top plan view, similar to FIG. 3, of the induction heating coil 10 according to the fifth embodiment. The induction heating coil 10 of the fifth embodiment includes a single central heating coil 40 and four of peripheral heating coils 42a-42d. Each of the central heating coil 40 and the peripheral heating coils 42a-42d has input and output terminals 21, 22. The induction heating coil 10 also includes a pair of thermal sensors 17 arranged beneath the top plate 6 and between the central heating coil 40 and the peripheral heating coils 42a-42d.

Although not shown, another thermal sensor 17 may be arranged in the center of the central heating coil 40. A plurality of the thermal sensors 17 may be arranged so that the control circuitry 18 enhances the accuracy of thermal detection and the safety for the induction heating system 1, and controls the driving circuitry 16 to supply the high-frequency current with the central heating coil 40 and the peripheral heating coils 42a-42d in a reliable manner. It should be noted that the central heating coil 40 and the peripheral heating coils 42a-42d may have any configurations as far as they are not concentric, and that each of the peripheral heating coils 42a-42d may have any shapes such as a sector and a triangle to achieve the same effects.

Provided between the central heating coil 40 and the peripheral heating coils 42a-42d of the fifth embodiment is a gap 30 similar to the fourth embodiment. According to the induction heating coil 10 having the central heating coil 40 and the peripheral heating coils 42a-42d so structured, the cooling air blown from the underside of the heating coils 40, 42a-42d through the gap 30 therebetween can cool down them in an efficient manner. Furthermore, provision of the gap between the central heating coil 40 and the peripheral heating coils 42a-42d allows the magnetic field distribution generated by the whole of the induction heating coil 10 to be homogenized in the radial direction, thereby to heat the pan K in a uniform manner.

Also in the fifth embodiment, the driving circuitry 16 of the induction heating system 1 may supply all of the central heating coil 40 and the peripheral heating coils 42a-42d with the high-frequency current, or upon connecting the opposing peripheral heating coils 42a, 42c and 42b, 42d in series or parallel, may supply individually the central heating coil 40, the peripheral heating coils 42a, 42c, and the peripheral heating coils 42b, 42d with the high-frequency current. This allows changing local areas to be heated.

For example, the high-frequency current supplied to the peripheral heating coils 42a-42d may be controlled to be greater than that supplied to the central heating coil 40 so that the peripheral surface (pan side surface) of the frying pan is intensively heated to reduce the thermal gap with the pan bottom. Alternatively, the control circuitry 18 may control the driving circuitry to supply each of the heating coils 40, 42a-42d with the appropriate high-frequency current so that the pan is heated by the central heating coil 40 and the peripheral heating coils 42a-42d in a uniform manner.

Likewise, the laminated conductor 20 composing the central heating coil 40 and the peripheral heating coils 42a-42d of the fifth embodiment may be configured to have the height H less than the width W (W > H), and the laminated conductor 20 composing the peripheral heating coils 42a-42d may be configured to have the height $H_P$ which is different from the height $H_C$ of the laminated conductor 20 composing the central heating coil 40. This reduces the material cost and the weight of the induction heating coil 10.

List of Reference Numerals

| | |
|---|---|
| 1 | induction heating system, |
| 5 | housing, |
| 6 | top plate, |
| 7 | induction heating device, |
| 8 | adjustment knob, |
| 10 | induction heating coil, |
| 12 | ferrite members, |
| 14 | coil platform, |
| 16 | driving circuitry (driver), |
| 18 | control circuitry (controller), |
| 20 | laminated conductor, |
| 21 | inner terminal, |
| 22 | outer terminal, |
| 24 | conducting layer, |
| 25 | insulating layer, |
| 26 | inner heating member, |
| 27 | middle heating member, |
| 28 | outer heating member, |
| 30 | gap, |
| 40 | central heating coil, |
| 42 | peripheral heating coil, |
| K | pan. |

**Claims**

1. An induction heating coil (10) formed by spirally winding an elongate laminated conductor (20) around a coil axis, the elongate laminated conductor (20) including a plurality of conducting layers (24) extending in an elongate direction and a plurality of insulating layers (25) formed between the conducting layers,

   each of the conducting layers (24) being connected in parallel with one another at both ends of the elongate laminated conductor (20), and

   the conducting layers (24) being laminated in a direction perpendicular to the coil axis around which the elongate laminated conductor (20) is wound, **characterized in that** the elongate laminated conductor (20) has a width (W) along the direction perpendicular to the coil axis is greater than a height (H) along the direction parallel to the coil axis.

2. The induction heating coil (10) according to claim 1,

   wherein the elongate laminated conductor (20) has the height (H) along the direction parallel to the coil axis, which is four time or less of a skin depth ($\delta$) defined by a following formula:

   [Formula 1]

   $$\delta \;=\; \sqrt{\dfrac{\rho}{\pi \,\cdot\, f \,\cdot\, \mu}} \;=\; \sqrt{\dfrac{1}{\pi \,\cdot\, f \,\cdot\, \mu \,\cdot\, \sigma}}$$

   wherein "$\rho$" denotes the electric resistance of the conducting layer 24, "f' denotes a frequency of the high-frequency voltage, "$\mu$" denotes the magnetic permeability of the conducting layer, and "$\sigma$" denotes the electric conductivity of the conducting layer.

3. The induction heating coil (10) according to claim 1 or 2,

   wherein the conducting layer of the elongate laminated conductor (20) has a width ($W_0$) along the direction perpendicular to the coil axis is in a range between 1/20 and 1/3 of the height (H) along the direction parallel to the coil axis.

4. The induction heating coil (10) according to any one of claims 1 to 3,

   wherein at least one of the conducting layers (24) laminated innermost in the radial direction has the height (H) in the direction parallel to the coil axis, extending downward beyond the other conducting layers.

5. The induction heating coil (10) according to any one of claims 1 to 4,

   wherein at least one of the conducting layers (24) laminated outermost in the radial direction has the height (H) in the direction parallel to the coil axis, extending downward beyond the other conducting layers.

6. The induction heating coil (10) according to claim 4,

   wherein the elongate laminated conductor (20) is configured so that at least one of the conducting layers (24) laminated outermost in the radial direction has the height (H) in the direction parallel to the coil axis, which is greater than the heights of any other conducting layers (24) except the different height of the conducting layer laminated innermost in the radial direction.

7. The induction heating coil (10) according to any one of claims 1 to 6,

   wherein the elongate laminated conductor (20) is configured so that the heights of the conducting layers (24)is gradually reduced from the conducting layer laminated innermost in the radial direction to one laminated in a middle thereof, and is gradually increased from the conducting layer laminated in the middle to one laminated outermost in the radial direction.

8. The induction heating coil (10) according to any one of claims 1 to 7, including an inner heating member and an outer heating member both formed by winding a train of the laminated conductor (20) around the coil axis, and wherein a gap is provided between the inner heating member and the outer heating member.

9. The induction heating coil (10) according to claim 8,

   wherein a deflecting member is arranged in the gap between the inner heating member and the outer heating member, which guides the cooling air to an upper surface of the outer heating member.

**10.** The induction heating coil (10) according to claim 9,
wherein the height ($H_1$) of the laminated conductor (20) composing the inner heating member is different from the height ($H_2$) of the laminated conductor (20) composing the outer heating member.

**11.** An induction heating system
including the induction heating coil (10) according to any one of claims 1 to 10.


**Patentansprüche**

**1.** Induktionsheizspule (10), die durch spiralförmiges Wickeln eines langgestreckten geschichteten Leiters (20) um eine Spulenachse ausgebildet ist, wobei der langgestreckte geschichtete Leiter (20) eine Vielzahl von Leitungsschichten (24) aufweist, die sich in einer Längsrichtung erstrecken, und eine Vielzahl von Isolationsschichten (25) aufweist, die zwischen den Leitungsschichten ausgebildet sind,
wobei jede der Leitungsschichten (24) an beiden Enden des langgestreckten geschichteten Leiters (20) zueinander parallel geschaltet ist, und
wobei die Leitungsschichten (24) in einer Richtung geschichtet sind, die senkrecht zu der Spulenachse ist, um die der langgestreckte geschichtete Leiter (20) gewickelt ist,
**dadurch gekennzeichnet,**
**dass** die Breite (W) des langgestreckten geschichteten Leiters (20) entlang der Richtung senkrecht zu der Spulenachse größer ist als die Höhe (H) entlang der Richtung parallel zu der Spulenachse.

**2.** Induktionsheizspule (10) gemäß Anspruch 1,
wobei der langgestreckte geschichtete Leiter (20) eine Höhe (H) entlang der Richtung parallel zu der Spulenachse aufweist, die maximal viermal so groß ist wie eine Eindringtiefe (δ), die durch die folgende Formel definiert ist:

[Formel 1]

$$\delta \quad = \quad \sqrt{\frac{\rho}{\pi \ \cdot \ f \ \cdot \ \mu}} \quad = \quad \sqrt{\frac{1}{\pi \ \cdot \ f \ \cdot \ \mu \ \cdot \ \sigma}}$$

wobei "ρ" den elektrischen Widerstand der Leitungsschicht 24 angibt, "f" die Frequenz der Hochfrequenzspannung angibt, "μ" die magnetische Permeabilität der Leitungsschicht angibt und "σ" die elektrische Leitfähigkeit der Leitungsschicht angibt.

**3.** Induktionsheizspule (10) gemäß Anspruch 1 oder 2,
wobei die Leitungsschicht des langgestreckten geschichteten Leiters (20) eine Breite (Wo) entlang der Richtung senkrecht zu der Spulenachse aufweist, die in einem Bereich zwischen 1/20 und 1/3 der Höhe (H) entlang der Richtung parallel zu der Spulenachse liegt.

**4.** Induktionsheizspule (10) gemäß einem der Ansprüche 1 bis 3,
wobei mindestens eine der Leitungsschichten (24), die in Radialrichtung gesehen ganz innen geschichtet ist, eine Höhe (H) in der Richtung parallel zu der Spulenachse aufweist, die sich nach unten über die anderen Leitungsschichten hinaus erstreckt.

**5.** Induktionsheizspule (10) gemäß einem der Ansprüche 1 bis 4,
wobei mindestens eine der Leitungsschichten (24), die in der Radialrichtung gesehen ganz außen geschichtet ist, eine Höhe (H) in der Richtung parallel zu der Spulenachse aufweist, die sich nach unten über die der anderen Leitungsschichten hinaus erstreckt.

**6.** Induktionsheizspule (10) gemäß Anspruch 4,
wobei der langgestreckte geschichtete Leiter (20) derart ausgebildet ist, dass mindestens eine der Leitungsschichten (24), die in Radialrichtung gesehen ganz außen geschichtet ist, eine Höhe (H) in der Richtung parallel zu der Spulenachse aufweist, die größer ist als die Höhe von jeder anderen Leitungsschicht (24), mit Ausnahme der sich unterscheidenden Höhe der Leitungsschicht, die in Radialrichtung gesehen ganz innen geschichtet ist.

7. Induktionsheizspule (10) gemäß einem der Ansprüche 1 bis 6,
wobei der langgestreckte geschichtete Leiter (20) derart ausgebildet ist, dass die Höhe der Leitungsschichten (24) graduell abnimmt, und zwar von der Leitungsschicht aus, die in Radialrichtung gesehen ganz innen geschichtet ist, zu einer in der Mitte hiervon geschichteten Leitungsschicht, und derart, dass die Höhe von der Leitungsschicht aus, die in der Mitte geschichtet ist, zu einer in Radialrichtung gesehenen ganz außen geschichteten Leitungsschicht graduell zunimmt.

8. Induktionsheizspule (10) gemäß einem der Ansprüche 1 bis 7,
die ein inneres Heizelement und ein äußeres Heizelement aufweist, die beide durch Wickeln einer Bahn des geschichteten Leiters (20) um die Spulenachse ausgebildet sind, und wobei zwischen dem inneren Heizelement und dem äußeren Heizelement ein Spalt angeordnet ist.

9. Induktionsheizspule (10) gemäß Anspruch 8,
wobei ein Umlenkelement in dem Spalt zwischen dem inneren Heizelement und dem äußeren Heizelement angeordnet ist, das die Kühlluft zu einer Oberfläche des äußeren Heizelements führt.

10. Induktionsheizspule (10) gemäß Anspruch 9,
wobei die Höhe ($H_1$) des geschichteten Leiters (20), der das innere Heizelement bildet, sich von der Höhe ($H_2$) des geschichteten Leiters (20) unterscheidet, der das äußere Heizelement bildet.

11. Induktionsheizsystem, das eine Induktionsheizspule (10) gemäß einem der Ansprüche 1 bis 10 aufweist.

**Revendications**

1. Serpentin de chauffage à induction (10) formée en enroulant en spirale un conducteur stratifié allongé (20) autour d'un axe de serpentin,
le conducteur stratifié allongé (20) incluant une pluralité de couches conductrices (24) s'étendant dans une direction allongée et une pluralité de couches isolantes (25) formées entre les couches conductrices,
chacune des couches conductrices (24) est connectée en parallèle avec une autre aux deux extrémités du conducteur stratifié allongé (20), et
les couches conductrices (24) sont stratifiées dans une direction perpendiculaire à l'axe de serpentin autour duquel le conducteur stratifié allongé (20) est enroulé,
**caractérisé en ce que** le conducteur stratifié allongé (20) a une largeur (W) le long de la direction perpendiculaire à l'axe de serpentin qui est plus grande qu'une hauteur (H) le long de la direction parallèle à l'axe de serpentin.

2. Serpentin de chauffage à induction (10) selon la revendication 1,
dans lequel le conducteur stratifié allongé (20) a une hauteur (H), le long de la direction parallèle à l'axe de serpentin, qui est quatre fois ou moins de quatre fois la profondeur superficielle ($\delta$) définie par la formule suivante :

[Formule 1]

$$\delta \;=\; \sqrt{\frac{\rho}{\pi \cdot f \cdot \mu}} \;=\; \sqrt{\frac{1}{\pi \cdot f \cdot \mu \cdot \sigma}}$$

dans laquelle "$\rho$" désigne la résistance électrique de la couche conductrice 24, "f" désigne une fréquence de la tension à haute fréquence, "$\mu$" désigne la perméabilité magnétique de la couche conductrice, et "$\sigma$" désigne la conductivité électrique de la couche conductrice.

3. Serpentin de chauffage à induction (10) selon la revendication 1 ou 2,
dans lequel la couche conductrice du conducteur stratifié allongé (20) a une largeur (Wo) le long de la direction perpendiculaire à l'axe de serpentin, qui est dans une plage entre 1/20 est 1/3 de la hauteur (H) le long de la direction parallèle à l'axe de serpentin.

**4.** Serpentin de chauffage à induction (10) selon l'une quelconque des revendications 1 à 3,
dans lequel au moins une des couches conductrices (24) stratifiée le plus à l'intérieur dans la direction radiale a une hauteur (H), dans la direction parallèle à l'axe de serpentin, qui s'étend vers le bas au-delà des autres couches conductrices.

**5.** Serpentin de chauffage à induction (10) selon l'une quelconque des revendications 1 à 4,
dans lequel l'une au moins des couches conductrices (24) stratifiée le plus à l'extérieur dans la direction radiale a une hauteur (H), dans la direction parallèle à l'axe de serpentin, qui s'étend vers le bas au-delà des autres couches conductrices.

**6.** Serpentin de chauffage à induction (10) selon la revendication 4,
dans lequel le conducteur stratifié allongé (20) est configuré de telle façon que l'une au moins des couches conductrices (24) stratifiée le plus à l'extérieur dans la direction radiale a une hauteur (H), dans la direction parallèle à l'axe de serpentin, qui est plus grande que les hauteurs de l'une quelconque des autres couches conductrices (24), exceptée la hauteur différente de la couche conductrice stratifiée le plus à l'intérieur dans la direction radiale.

**7.** Serpentin de chauffage à induction (10) selon l'une quelconque des revendications 1 à 6,
dans lequel le conducteur stratifié allongé (20) est configuré de telle façon que les hauteurs des couches conductrices (24) sont progressivement réduites depuis la couche conductrice stratifiée le plus à l'intérieur dans la direction radiale vers une couche stratifiée au milieu de serpentin, et sont progressivement augmentées depuis la couche conductrice stratifiée au milieu jusqu'à la couche stratifiée la plus à l'extérieur dans la direction radiale.

**8.** Serpentin de chauffage à induction (10) selon l'une quelconque des revendications 1 à 7,
incluant un élément de chauffage intérieur et un élément de chauffage extérieur formés tous les deux en enroulant un train du conducteur stratifié (20) autour de l'axe de serpentin, et dans lequel un intervalle est prévu entre l'élément de chauffage intérieur et l'élément de chauffage extérieur.

**9.** Serpentin de chauffage à induction (20) selon la revendication 8,
dans lequel un élément de déflexion est agencé dans l'intervalle entre l'élément de chauffage intérieur et l'élément de chauffage extérieur, qui guide l'air de refroidissement jusqu'à une surface supérieure de l'élément de chauffage extérieur.

**10.** Serpentin de chauffage à induction (10) selon la revendication 9,
dans lequel la hauteur (H) du conducteur stratifié (20) qui compose l'élément de chauffage intérieur est différente de la hauteur (H2) du conducteur stratifié (20) qui compose l'élément de chauffage extérieur.

**11.** Système de chauffage à induction,
incluant le serpentin de chauffage à induction (10) selon l'une quelconque des revendications à 10.

Fig.1

## Fig.2

## Fig.3

*Fig.4*

*Fig.5A*

*Fig.5B*

*Fig.6*

*Fig.7*

*Fig.8*

*Fig.9*

*Fig.10*

*Fig.11*

CENTER
OF COIL

## Fig.12A

## Fig.12B

## Fig.12C

## Fig.12D

## Fig.12E

*Fig.13*

10

17

21

22

*Fig.14*

10

28

17

26

21

22

*Fig.15*

*Fig.16*

## Fig.17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10321358 A
- JP 4491983 B

- WO 9522239 A1